# EUROPEAN PATENT SPECIFICATION

(11) **EP 3 239 493 B1**
(45) Date of publication and mention of the grant of the patent: **01.06.2022**
(21) Application number: 17168059.8
(22) Date of filing: 25.04.2017
(51) Int. Cl.: F02C 7/18, F02K 3/02, F28D 7/12, F01D 25/12

(54) **SIMPLE HEAT EXCHANGER USING SUPER ALLOY MATERIALS**
EINFACHER WÄRMETAUSCHER MIT SUPERLEGIERUNGSMATERIALIEN
ÉCHANGEUR DE CHALEUR SIMPLE UTILISANT DES MATÉRIAUX DE SUPERALLIAGE

(30) Priority: 26.04.2016 US 201615138491
(43) Date of publication of application: 01.11.2017
(73) Proprietor: Raytheon Technologies Corporation, Farmington, CT 06032 (US)
(72) Inventor: SCHWARZ, Frederick M., Glastonbury, CT Connecticut 06033 (US); DUESLER, Paul W., Manchester, CT Connecticut 06040 (US)
(74) Representative: Dehns

(56) References cited:
- WO-A1-2015/047533
- US-A- 3 811 960
- US-A- 5 269 133
- US-A- 5 269 135
- US-A- 5 413 752
- US-A- 6 134 880
- US-B2- 8 534 043

## Description

### BACKGROUND OF THE INVENTION

This application relates to a heat exchanger for providing cooling air in a gas turbine engine.

Gas turbine engines are known and typically include a fan delivering air into a bypass duct as propulsion air, and further providing air into a core housing. Air in the core housing passes into a compressor where it is compressed, and then into a combustor where it is mixed with fuel and ignited. Products of this combustion pass downstream over turbine rotors, driving them to rotate.

As is known, turbine components see very high temperatures and thus cooling air has been typically provided to those components. Historically, the fan and a low pressure compressor have rotated as a single unit along with a fan drive turbine. However, more recently, a gear reduction has been placed between the fan rotor and the fan drive turbine. This allows the fan rotor to rotate at slower speeds and the fan drive turbine to rotate at faster speeds. This raises the challenges on the turbine components and requires more efficient provision of the cooling air.

At the same time, the overall pressure ratio provided by the compressor has increased. Historically, the air to cool the turbine components has been tapped from a location downstream of a highest pressure location on the compressor. However, with the increase in overall pressure ratio, this air has become hotter.

The heat exchangers for cooling this air are thus subject to extreme challenges.

US 5,269,133 discloses a gas turbine engine as set forth in the preamble of claim 1.

US 3,811,960 discloses nickel chromium alloys. Other examples of prior art solutions are provided in document US5413752.

### SUMMARY OF THE INVENTION

The present invention provides a gas turbine engine as recited in claim 1.

Features of embodiments of the invention are set forth in the dependent claims.

### BRIEF DESCRIPTION OF THE DRAWINGS

Figure 1 schematically shows a gas turbine engine.
Figure 2 schematically shows the provision of a turbine cooling system.
Figure 3A shows a first heat exchanger.
Figure 3B shows an alternative arrangement.
Figure 3C shows a further detail of the arrangement of Figure 3B.
Figure 4A shows an alternative location for a heat exchanger.
Figure 4B shows yet another alternative for a heat exchanger.

### DETAILED DESCRIPTION

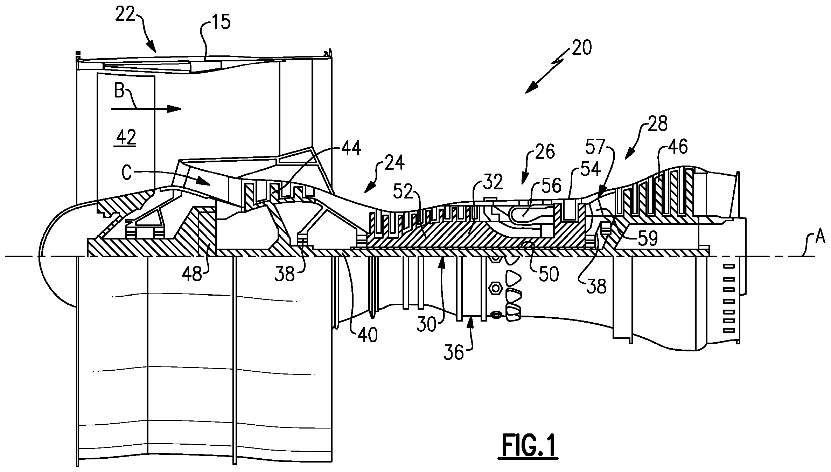

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. The engine 20 bypass ratio may be greater than about six, and may be greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. The engine 20 bypass ratio may be greater than about ten, the fan diameter may be significantly larger than that of the low pressure compressor 44, and the low pressure turbine 46 may have a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein may be less than about 1.45. "Low corrected fan tip speed" is the actual fan tip speed in ft/sec divided by an industry standard temperature correction of [(Tram °R) / (518.7 °R)]^{0.5}(where °R = K x 9/5). The "Low corrected fan tip speed" as disclosed herein may be less than about 1150 ft / second (350.5 meters/second).

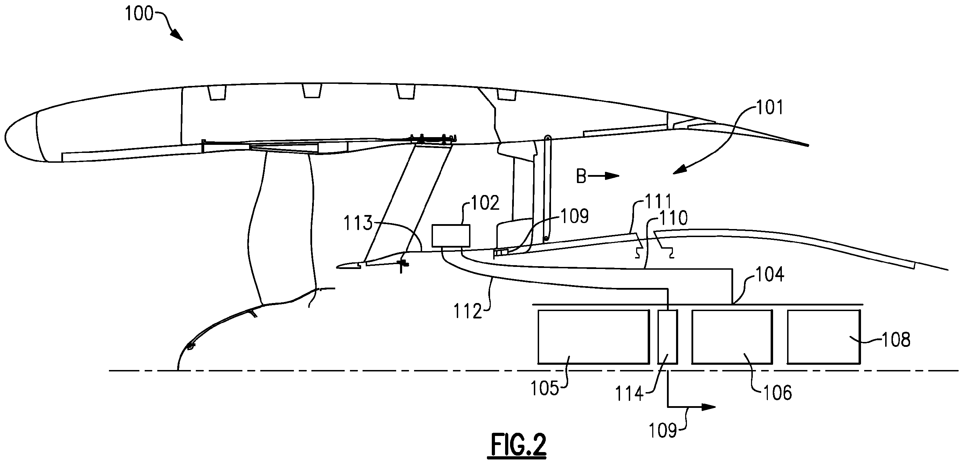

Figure 2 shows an engine 100 with turbine cooling system 101. Heat exchanger 102 is placed in the bypass duct B. Air from a location 104, which is downstream of a high pressure compressor 105, is tapped. The air is shown tapped outwardly of a combustor 106, however, other locations may be utilized. The air is cooled and then provided to the turbine section 108 for cooling components in the turbine section 108. The tapped air is tapped through conduit 110 to the heat exchanger 102. As shown, the heat exchanger 102 is positioned forwardly of a pivoting housing member 111 having a pivot point 109. Stated another way, the heat exchanger 102 is placed in the bypass duct B, but outwardly of a fixed inner structure 113. This simplifies the connection of the conduits 110 and 112 to the heat exchanger 102. Conduit 112 returns the air back into the housing and through a hollow strut 114, where it passes radially inwardly and then to the turbine section 108 at 109.

Preferably there are a plurality of circumferentially spaced conduits 110, 112 and struts 114.

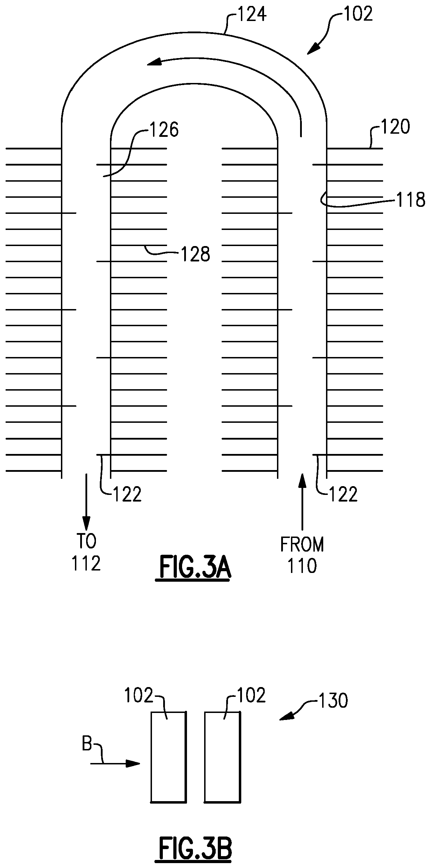

Figure 3A shows an exemplary heat exchanger 102. Air from conduit 110 passes into a tube 118. The tube 118 is provided with fins 120. Further, trip strips or other turbulence causing structures 122 may be formed on an inner wall of the tube 118. The tube 118 is preferably relatively short, as radially outer locations will provide less efficient cooling than radially inner locations.

The air reaches an elbow 124 and then returns inwardly through another tube 126 which may be provided with fins 128 and also trip strips, if desired. That air returns to the conduit 112.

As shown in Figure 3B, there may be axially spaced heat exchangers 102, spaced serially into the engine in an arrangement 130.

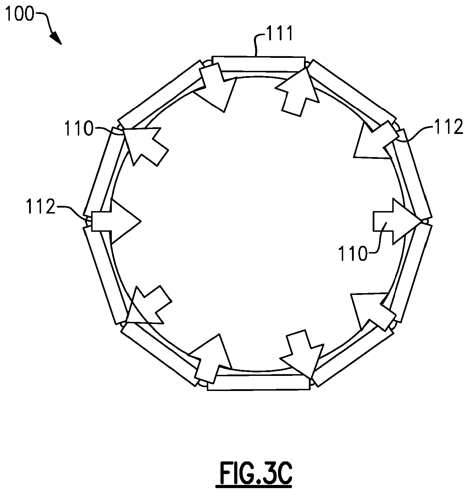

Figure 3C shows a feature of the engine 100 wherein there are a plurality of circumferentially spaced conduits 110 and conduits 112, shown schematically. This eliminates dead zones which will decrease the efficiency of cooling.

When present, the heat exchanger tubes 118 and 126, the fins 120 and 128 and trip strips 122 are formed of a super alloyed material typically utilized for turbine components, in particular, a cast nickel alloy material including more than 50-percent by volume gamma-prime (Y¹). Intermetallic phase material may be utilized as the Y' material. The intermetallic phase material may be Ni₃AL or Ni₃TI as examples.

The use of this alloy, which has been typically reserved for use in the turbine, allows the heat exchanger to survive much higher temperatures than with typical heat exchangers utilized in gas turbine engines. As such, the challenges mentioned above can be addressed.

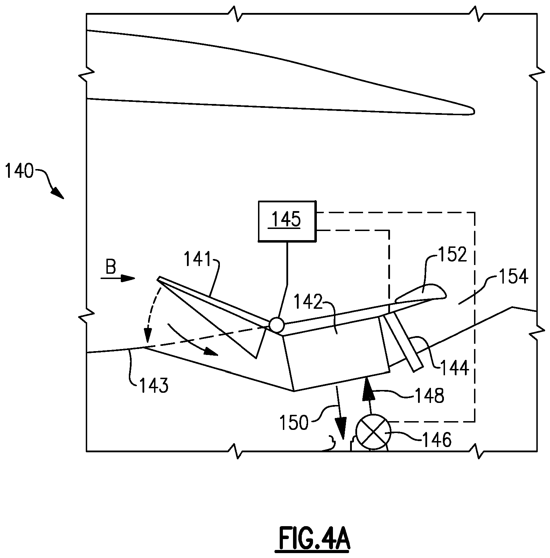

Figure 4A shows an arrangement 140, where a heat exchanger 142 is positioned within a core housing 143. A pivoting door 141, which is controlled by a control 145, such as the overall engine control (FADEC) or may be a standalone control. Door 141 is pivoted to the illustrated open position when cooling is desired and pivoted to a closed position when cooling is no longer necessary, such as at cruise or idle conditions.

Cooling air passes over the heat exchanger 142 and through a duct 144, which may also be selectively closed by control 145. Air is tapped through a valve 146 from the hot location, as in the Figure 2, and into a conduit 148 for delivery into the heat exchanger 142, and then back through a conduit 150 to be delivered to the turbine section. In Figure 2, the duct 144 is positioned upstream of a fan nozzle plane 154. This allows a lower downstream pressure, and even fan flow separation. A ramp 152 may be placed at the location forward of the exhaust to also facilitate these goals.

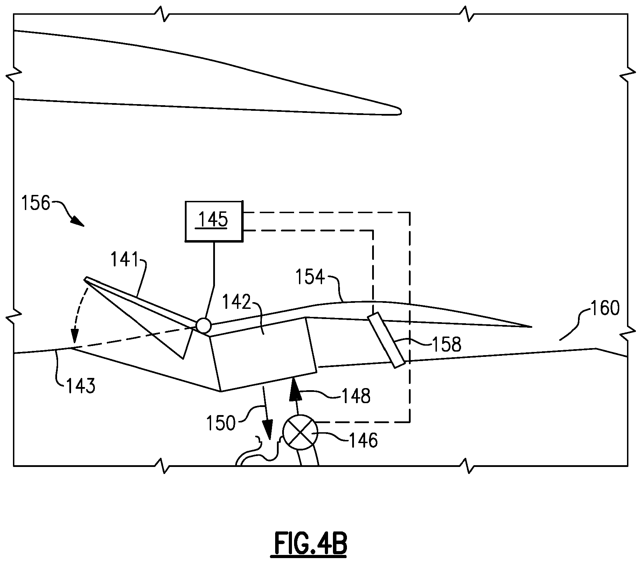

Figure 4B shows an alternative arrangement 146, which is similar to Figure 4A, except that the duct 158 is positioned downstream of the nozzle plane 154, as is the exhaust 160.

The Figures 4A and 4B location can receive heat exchangers, such as those disclosed in Figures 3A-3C.

The scope of the invention is defined by the appended claims.

## Claims

1. A gas turbine engine (100; 140) comprising:
a heat exchanger system comprising a plurality of circumferentially spaced heat exchangers (102; 142) formed of elongated members (118) having fins (120) on an outer surface;
a compressor section (24), a combustor section (26), a turbine section (28; 108);
a core housing (143) containing said compressor section (24), said combustor section (26) and said turbine section (28; 108); and
a first conduit (110; 148) for tapping hot compressed air to be cooled and passing said air to the heat exchanger system, said air being cooled in said heat exchanger system and returned to a return conduit (112; 150), said return conduit (112; 150) passing the cooled air to said turbine section (28; 108),
**characterised in that**:
said spaced heat exchangers (102; 142) are formed of a nickel alloy material including more than 50-percent by volume gamma-prime intermetallic phase material.

2. The gas turbine engine (100; 140) as set forth in claim 1, wherein said elongated members (118) are tubes (118).

3. The gas turbine engine (100; 140) as set forth in claim 1 or 2, wherein said elongated members (118) extend radially outwardly to an elbow (124) which takes air radially outwardly to said elbow (124) and a second elongated member (126) returns air radially inwardly into a housing (143) for said engine (100; 140).

4. The gas turbine engine (100; 140) as set forth in any preceding claim, wherein there are a plurality of axially spaced heat exchangers (102; 142).

5. The gas turbine engine (100) as set forth in any preceding claim, wherein said heat exchanger system (102) is positioned in a bypass duct (B) outwardly of said core housing (143).

6. The gas turbine engine (100) as set forth in claim 5, wherein said heat exchanger system (102) is positioned forwardly of a pivot (109) point for a pivoting portion (111) of said core housing (143), and said heat exchanger system (102) is positioned radially outwardly of a fixed inner structure (113).

7. The gas turbine engine (140) as set forth in any of claims 1 to 4, wherein said heat exchanger system (142) is positioned within said core housing (143).

8. The gas turbine engine (140) as set forth in claim 7, wherein a pivoting door (141) selectively allows bypass air to pass over said heat exchanger (142) for cooling said heat exchanger system (142).

9. The gas turbine engine (140) as set forth in claim 7 or 8, wherein a valve (146) selectively controls the flow of said compressed air to said heat exchanger system (142).

10. The gas turbine engine (140) as set forth in any of claims 7 to 9, wherein a duct (144) for controlling the flow of air downstream of said heat exchanger system (142) is positioned upstream of a fan nozzle plane (154) of said gas turbine engine (140).

11. The gas turbine engine (140) as set forth in claim 10, wherein a ramp (152) causes a lower pressure downstream of said ramp (152) to facilitate flow of the bypass air over said heat exchanger system (142) and into an exhaust (160).

12. The gas turbine engine (140) as set forth in any of claims 7 to 9, wherein a duct (158) for controlling the flow of air downstream of said heat exchanger system (142) is positioned downstream of a nozzle plane (154).

13. The gas turbine engine (100; 140) as set forth in any preceding claim, wherein said return conduit (112) passes the cooled air into a strut (114) and radially inwardly to pass to the turbine section (28; 108).

## Patentansprüche

1. Gasturbinentriebwerk (100; 140), umfassend:
ein Wärmetauschersystem, das eine Vielzahl von in Umfangsrichtung beabstandeten Wärmetauschern (102; 142) umfasst, die aus länglichen Elementen (118) ausgebildet sind, die Rippen (120) an einer Außenfläche aufweisen;
einen Verdichterabschnitt (24), einen Brennkammerabschnitt (26), einen Turbinenabschnitt (28; 108);
ein Kerngehäuse (143), das den Verdichterabschnitt (24), den Brennkammerabschnitt (26) und den Turbinenabschnitt (28; 108) enthält; und
eine erste Leitung (110; 148) zum Abzapfen von heißer verdichteter Luft, die zu kühlen ist, und Leiten der Luft zum Wärmetauschersystem, wobei die Luft in dem Wärmetauschersystem gekühlt wird und zu einer Rückführleitung (112; 150) zurückgeführt wird, wobei die Rückführleitung (112; 150) die gekühlte Luft zum Turbinenabschnitt (28; 108) leitet,
**dadurch gekennzeichnet, dass**:
die beabstandeten Wärmetauscher (102; 142) aus einem Nickellegierungsmaterial hergestellt sind, das mehr als 50 Volumenprozent Gamma-Strich-Intermetallphasenmaterial beinhaltet.

2. Gasturbinentriebwerk (100; 140) nach Anspruch 1, wobei die länglichen Elemente (118) Röhren (118) sind.

3. Gasturbinentriebwerk (100; 140) nach Anspruch 1 oder 2, wobei sich die länglichen Elemente (118) radial nach außen zu einem Bogen (124) erstrecken, der die Luft radial nach außen zu dem Bogen (124) führt, und ein zweites längliches Element (126) die Luft radial nach innen in ein Gehäuse (143) für das Triebwerk (100; 140) zurückführt.

4. Gasturbinentriebwerk (100; 140) nach einem der vorstehenden Ansprüche, wobei eine Vielzahl von axial beabstandeten Wärmetauschern (102; 142) vorliegt.

5. Gasturbinentriebwerk (100) nach einem der vorstehenden Ansprüche, wobei das Wärmetauschersystem (102) in einem Nebenstromkanal (B) außerhalb des Kerngehäuses (143) angeordnet ist.

6. Gasturbinentriebwerk (100) nach Anspruch 5, wobei das Wärmetauschersystem (102) vor einem Dreh(109)punkt für einen drehbaren Abschnitt (111) des Kerngehäuses (143) angeordnet ist und das Wärmetauschersystem (102) radial auswärts einer feststehenden inneren Struktur (113) angeordnet ist.

7. Gasturbinentriebwerk (140) nach einem der Ansprüche 1 bis 4, wobei das Wärmetauschersystem (142) innerhalb des Kerngehäuses (143) angeordnet ist.

8. Gasturbinentriebwerk (140) nach Anspruch 7, wobei eine Drehtür (141) es der Nebenstromluft selektiv ermöglicht, über den Wärmetauscher (142) zum Kühlen des Wärmetauschersystems (142) zu strömen.

9. Gasturbinentriebwerk (140) nach Anspruch 7 oder 8, wobei ein Ventil (146) den Strom der verdichteten Luft zu dem Wärmetauschersystem (142) selektiv steuert.

10. Gasturbinentriebwerk (140) nach einem der Ansprüche 7 bis 9, wobei ein Kanal (144) zum Steuern des Luftstroms stromabwärts des Wärmetauschersystems (142) stromaufwärts einer Fandüsenebene (154) des Gasturbinentriebwerks (140) angeordnet ist.

11. Gasturbinentriebwerk (140) nach Anspruch 10, wobei eine Rampe (152) einen niedrigeren Druck stromabwärts der Rampe (152) bewirkt, um einen Strom der Nebenstromluft über das Wärmetauschersystem (142) und in einen Auslass (160) zu erleichtern.

12. Gasturbinentriebwerk (140) nach einem der Ansprüche 7 bis 9, wobei ein Kanal (158) zum Steuern des Luftstroms stromabwärts des Wärmetauschersystems (142) stromabwärts einer Düsenebene (154) angeordnet ist.

13. Gasturbinentriebwerk (100, 140) nach einem der vorstehenden Ansprüche, wobei die Rückführleitung (112) die gekühlte Luft in eine Strebe (114) und radial nach innen leitet, um sie zum Turbinenabschnitt (28, 108) zu leiten.

## Revendications

1. Moteur à turbine à gaz (100 ; 140) comprenant :
un système d'échangeur de chaleur comprenant une pluralité d'échangeurs de chaleur espacés de manière circonférentielle (102 ; 142) formés d'éléments allongés (118) ayant des ailettes (120) sur une surface extérieure ;
une section compresseur (24), une section chambre de combustion (26), une section turbine (28 ; 108) ;
un carter principal (143) contenant ladite section compresseur (24), ladite section chambre de combustion (26) et ladite section turbine (28 ; 108) ; et
un premier conduit (110 ; 148) pour prélever de l'air comprimé chaud à refroidir et faire passer ledit air vers le système d'échangeur de chaleur, ledit air étant refroidi dans ledit système d'échangeur de chaleur et renvoyé vers un conduit de retour (112 ; 150), ledit conduit de retour (112 ; 150) faisant passer l'air refroidi vers ladite section turbine (28 ; 108),
**caractérisé en ce que** :
lesdits échangeurs de chaleur espacés (102 ; 142) sont constitués d'un matériau d'alliage de nickel comportant plus de 50 pour cent en volume de matériau de phase intermétallique gamma-prime.

2. Moteur à turbine à gaz (100 ; 140) selon la revendication 1, dans lequel lesdits éléments allongés (118) sont des tubes (118) .

3. Moteur à turbine à gaz (100 ; 140) selon la revendication 1 ou 2, dans lequel lesdits éléments allongés (118) s'étendent radialement vers l'extérieur vers un coude (124) qui prend l'air radialement vers l'extérieur vers ledit coude (124) et un second élément allongé (126) renvoie l'air radialement vers l'intérieur dans un carter (143) pour ledit moteur (100 ; 140).

4. Moteur à turbine à gaz (100 ; 140) selon une quelconque revendication précédente, dans lequel il existe une pluralité d'échangeurs de chaleur espacés axialement (102 ; 142).

5. Moteur à turbine à gaz (100), selon une quelconque revendication précédente, dans lequel ledit système d'échangeur de chaleur (102) est positionné dans un conduit de dérivation (B) vers l'extérieur dudit carter principal (143).

6. Moteur à turbine à gaz (100) selon la revendication 5, dans lequel ledit système d'échangeur de chaleur (102) est positionné vers l'avant d'un point de pivot (109) pour une partie pivotante (111) dudit carter principal (143), et ledit système d'échangeur de chaleur (102) est positionné radialement vers l'extérieur d'une structure intérieure fixe (113).

7. Moteur à turbine à gaz (140) selon l'une quelconque des revendications 1 à 4, dans lequel ledit système d'échangeur de chaleur (142) est positionné à l'intérieur dudit carter principal (143).

8. Moteur à turbine à gaz (140) selon la revendication 7, dans lequel une porte pivotante (141) permet sélectivement à l'air de dérivation de passer sur ledit échangeur de chaleur (142) pour refroidir ledit système d'échangeur de chaleur (142).

9. Moteur à turbine à gaz (140) selon la revendication 7 ou 8, dans lequel une vanne (146) commande sélectivement le flux dudit air comprimé vers ledit système d'échangeur de chaleur (142) .

10. Moteur à turbine à gaz (140) selon l'une quelconque des revendications 7 à 9, dans lequel un conduit (144) pour commander le flux d'air en aval dudit système d'échangeur de chaleur (142) est positionné en amont d'un plan de buse de soufflante (154) dudit moteur à turbine à gaz (140).

11. Moteur à turbine à gaz (140) selon la revendication 10, dans lequel une rampe (152) provoque une pression inférieure en aval de ladite rampe (152) pour faciliter le flux de l'air de dérivation sur ledit système d'échangeur de chaleur (142) et dans un échappement (160).

12. Moteur à turbine à gaz (140) selon l'une quelconque des revendications 7 à 9, dans lequel un conduit (158) pour commander le flux d'air en aval dudit système d'échangeur de chaleur (142) est positionné en aval d'un plan de buse (154).

13. Moteur à turbine à gaz (100 ; 140) selon une quelconque revendication précédente, dans lequel ledit conduit de retour (112) fait passer l'air refroidi dans une entretoise (114) et radialement vers l'intérieur pour le faire passer vers la section turbine (28 ; 108).
